Europäisches Patentamt

European Patent Office

Office européen des brevets

(11) Veröffentlichungsnummer: **0 155 479**
**A2**

(12) # EUROPÄISCHE PATENTANMELDUNG

(21) Anmeldenummer: **85101110.6**

(22) Anmeldetag: **02.02.85**

(51) Int. Cl.⁴: **C 02 F 1/76**

(30) Priorität: **22.03.84 DE 3410489**

(43) Veröffentlichungstag der Anmeldung:
**25.09.85 Patentblatt 85/39**

(84) Benannte Vertragsstaaten:
**AT BE CH DE FR GB IT LI NL SE**

(71) Anmelder: **Heraeus Elektroden GmbH**
**Heraeusstrasse 12 - 14**
**D-6450 Hanau/Main(DE)**

(72) Erfinder: **Fabian, Peter**
**Theodor-Heuss-Strasse 4**
**D-6463 Freigericht 1(DE)**

(72) Erfinder: **Gündling, Manfred**
**Bogenstrasse 40**
**D-8755 Alzenau-Michelbach(DE)**

(72) Erfinder: **Rössler, Peter**
**Büdinger Strasse 5**
**D-6451 Ronneburg 1(DE)**

(74) Vertreter: **Heinen, Gerhard, Dr.**
**W.C. Heraeus GmbH Zentralbereich Patente und**
**Lizenzen Heraeusstrasse 12-14**
**D-6450 Hanau(DE)**

(54) Verfahren und Vorrichtung, insbesondere zur Desinfektion von Wasser.

(57) Es sind Verfahren und entsprechende Vorrichtungen zur Desinfektion/Sterilisation/Entkeimung von Wasser bekannt, bei denen eine Hypochloritlösung auf elektrochemischem Wege mittels Elektrolysezelle hergestellt und dem zu desinfizierenden Wasser zudosiert wird. Um mit solchen Verfahren und Vorrichtungen eine kostengünstige Herstellung der Hypochloritlösung ohne großen Aufwand unter definierten Bedingungen zu ermöglichen und ein Verfahren und eine Vorrichtung zu schaffen, das bzw. die sich besonders für die Herstellung von geringen Mengen einer Hypochloritlösung und einen diskontinuierlichen Betrieb eignet, wird bei einem Verfahren das mit einer bevorrateten Sole zu vermischende Wasser direkt einer unter konstantem Druck stehenden Rohrleitung entnommen und die auf elektrochemischem Wege erzeugte Hypochloritlösung direkt dem zu desinfizierenden Wasser zudosiert. Bei einer entsprechenden Vorrichtung wird hierzu der Zulauf zu der Elektrolysezelle mit einer unter konstantem Druck stehenden Rohrleitung verbunden, die durch ein von einer elektrischen Zusatzsteuerung angesteuertes Absperrorgan geöffnet oder geschlossen wird, und es wird weiterhin die in der Elektrolysezelle erzeugte Hypochloritlösung einer Dosierstelle in der von dem zu desinfizierenden Medium durchströmten Rohrleitung über eine direkte Dosierleitung von der Elektrolysezelle zugeführt.

./...

Hanau, den 21. März 1984
ZPL-eG/W


Heraeus Elektroden GmbH, Hanau


Patentanmeldung


"Verfahren und Vorrichtung, insbesondere zur Desinfektion
von Wasser"


Die Erfindung betrifft ein Verfahren zur Desinfektion/
Sterilisatin/Entkeimung von Wasser gemäß dem Oberbegriff
des Anspruchs 1 und eine Vorrichtung zur Durchführung dieses
Verfahrens gemäß dem Oberbegriff des Anspruchs 2.

Zur Desinfektion/Sterilisation/Entkeimung von Wasser, wie
Trinkwasser, Brauchwasser, Badewasser, Kühlwasser oder Abwasser,
werden Hypochloritlösungen aus Wasser mit einem geringen
Anteil an Salz verwendet. Derartige Hypochloritlösungen werden
auch in der Medizin zur Sterilisation von Gummi und Plastikmaterial eingesetzt; ebenso wird Hypochlorit in der Galvanotechnik zur Cyanid-Entgiftung benutzt.

Bevorzugt wird eine Natriumhypochloritlösung benutzt, da
Natriumhypochlorit ein starkes und darüber hinaus geruchloses
Oxidationsmittel ist, das in den zur Desinfektion erforderlichen
Konzentrationen ungefährlich ist und mit dem eine sofortige
und anhaltende Wirkung erzielt werden kann.

Zur Herstellung und Dosierung einer solchen Natriumhypochloritlösung ist ein Elektrolysegerät der W. C. Heraeus GmbH bekannt,
das unter der Bezeichnung HDCS vertrieben wird. Dieses HDCS-
Elektrolysegerät arbeitet mit einer Elektrolysezelle mit
selbstreinigendem Elektrodenpaket, wie sie in der DE-OS 31 38 438
beschrieben ist, und weist daneben als weitere Bauteile Vorratsbehälter für Frischwasser, Sole und Natriumhypochlorit,
mehrere Dosierpumpen, einen Energieversorgungsteil und einen
elektronischen Steuerteil auf. Bei diesem Elektrolysegerät
werden zwei Vorratsbehälter über Schwimmerventile mit Wasser
gefüllt. In einen der beiden Vorratsbehälter wird neutrales
Kochsalz gegeben und so eine Salzsole mit vorgegebener Konzentration bevorratet. Sole und Wasser aus diesen beiden
Vorratsbehältern werden mittels Pumpe im gewünschten Verhältnis entnommen und nach Messung der vorhandenen Salzkonzentration an einer Konzentrationsmeßstelle wird die Lösung
der Elektrolysezelle zugeleitet, wo sie auf elektrochemischem
Wege in Natriumhypochlorit umgewandelt wird. Die so hergestellte
Natriumhypochloritlösung wird in einem Behälter bevorratet
und von dort mittels Dosierpumpe in der benötigten Menge
dem zu desinfizierenden Wasser zugeführt. Derartige HDCS-
Elektrolysegeräte haben sich sehr gut zur Desinfektion von
Wasser bewährt, insbesondere bei der Trinkwasser-Desinfektion
auf Großbaustellen, der Badewasser-Desinfektion in öffentlichen
Schwimmbädern, bei der Brauchwasser-Desinfektion in der Lebensmittel- und Getränkeindustrie und bei der Kühlwasser-Desinfektion
im Kraftwerksbau, also überall dort, wo die Bereitstellung
einer großen Menge an Natriumhypochloritlösung erforderlich
ist. Hier fallen die Kosten eines solchen Elektrolysegerätes
kaum ins Gewicht. Anders verhält es sich aber überall dort,
wo nur geringe Mengen an Hypochloritlösungen benötigt werden,
die darüber hinaus nicht kontinuierlich - im Sinne von täglich -
benötigt werden, wie beispielsweise im privaten Schwimmbadbereich mit kleinem Beckenvolumen oder aber beim direkten Einsatz neben einer Brauchwasserstelle. Neben den zu hohen
Kosten eines solchen Gerätes ist aber auch die Platzinanspruchnahme in Folge der Vielzahl von Vorratsbehältern und Pumpen
relativ groß. Hinzu kommt, daß Hypochlorite unter Einwirkung
von Licht nicht sonderlich stabil sind, d. h. sie zersetzen
sich relativ schnell, so daß eine längere Bevorratung größerer
Mengen nicht möglich ist.

Der vorliegenden Erfindung liegt nun die Aufgabe zugrunde,
Verfahrensschritte und eine Vorrichtung zur Herstellung einer
Hypochloritlösung anzugeben, die eine kostengünstige Herstellung der Lösung ohne großen Aufwand unter definierten Bedingungen ermöglichen, die sich besonders für die Herstellung
von geringen Mengen einer Hypochloritlösung und einen diskontinuierlichen Betrieb eignen.

Diese Aufgabe wird bei einem Verfahren durch die kennzeichnenden
Merkmale des Anspruchs 1 und bei einer Vorrichtung durch
die kennzeichnenden Merkmale des Anspruchs 2 gelöst. Das
Verfahren arbeitet ohne aufwendige Zwischenschritte. Das
mit der bevorrateten Sole zu vermischende Wasser wird direkt
einer unter konstantem Druck stehenden Rohrleitung entnommen
und die auf elektrochemischem Wege erzeugte Hypochloritlösung
wird dem zu desinfizierenden Wasser direkt zudosiert. Es
wird lediglich Hypochloritlösung in der Menge hergestellt,
in der sie momentan erforderlich ist und verwendet wird.
Eine Zwischenlagerung einer Hypochloritlösung entfällt hierbei.
Die Vorrichtung ist universell in all den Fällen anwendbar,
in denen der Verbraucher eine durchströmte unter konstantem
Druck stehende Rohrleitung zum Einbau anbieten kann. Sie
läßt sich innerhalb ihrer Leistungsgrenzen praktisch stufenlos
den Bedürfnissen des Verbrauchers anpassen. In der Elektrolysezelle wird nur eine solche Menge an Hypochloritlösung hergestellt, die der Durchflußmenge durch die Rohrleitung entspricht. Sie wird dem Verbraucher direkt in der erforderlichen Menge pro Zeiteinheit ohne eine weitere Dosiereinrichtung zugeleitet. Die Vorrichtung kann in den entscheidenden Parametern, wie Menge des fließenden Gleichstromes in Ampere für die Elektrolysezelle, Durchfluß durch die Zelle in l/h und Salzkonzentration in g NaCl/l, kontrolliert justiert werden.

Zur Überwachung des Systems ist eine justierbare Durchfluß-Meßeinrichtung vor der Chloritkonzentrationsmeßzelle und hinter der Einspeisstelle der Salzlösung aus dem Salzlösebehälter in den Zulauf für die Elektrolysezelle sinnvoll. Eine solche Chloritkonzentrationsmeßzelle kann an dieser Stelle eingesetzt werden, da die der Elektrolysezelle zugeführte Wassermenge der der Rohrleitung zugeführten Dosiermenge entspricht.

Vorteilhafterweise werden die geregelte Gleichstromversorgung der Elektrolysezelle mit Transformator und Gleichrichter, das elektrische Absperrorgan im Wasserzulauf sowie die als Dosierpumpe ausgebildete Pumpe des Salzlösebehälters zentral von der Zusatzsteuerung eingeschaltet. Die Vorrichtung wird demnach in allen ihren elektrischen Komponenten nur dann betrieben, wenn dem zu desinfizierenden Wasser Hypochloritlösung zudosiert werden soll.

Um die Elektrolysevorrichtung an einem Verbraucher, beispielsweise einer Wasserentnahmestelle, automatisiert einsetzen zu können, ist ein Durchflußwächter mit einem Impulsgeber vorteilhaft, durch den über die elektrische/elektronische Steuerung die Elektrolysezelle und damit die Herstellung der erforderlichen Menge an Hypochloritlösung impulsabhängig in Gang gesetzt werden kann. Bei einem Anschluß der Elektrolysevorrichtung an eine Umwälzleitung kann diese auch über die ohnehin vorhandene elektrische Steuerung einer Umwälzpumpe geregelt werden. Hierbei sind keine gesonderten Bauteile
erforderlich.

Durch eine direkte elektrische Verbindung der Chloritkonzentrationsmeßzelle mit dem Transformator/Gleichrichter ist
eine vorteilhafterweise direkte Steuerung der Elektrolysezelle
in Abhängigkeit von der momentanen Chloritkonzentration in
der Zulaufleitung möglich.

Um einerseits die Wartungsfreundlichkeit der Anlage zu erhöhen
und andererseits den erforderlichen Platzbedarf zum Installieren
der Anlage am Einsatzort gering zu halten, ist die Anordnung
der Bauteile, wie Elektrolysezelle, Chloritkonzentrationsmeßzelle, Absperrorgan, Durchfluß- Meß- und Regelgerät und Steuer-
Energieversorgungsteil, auf einer senkrecht, beispielsweise
an einer Wand direkt neben dem Verbraucher montierbaren Montageplatte, nützlich. Hierdurch wird durch die Vorrichtung kaum
Platz, insbesondere Stellfläche, benötigt. Außerdem sind
auf diese Weise alle Bauteile nicht nur zur Steuerung und
Regelung der Vorrichtung gut zugänglich, sondern sie können
auch jederzeit in ihrer Funktion gut überwacht und gewartet
werden.

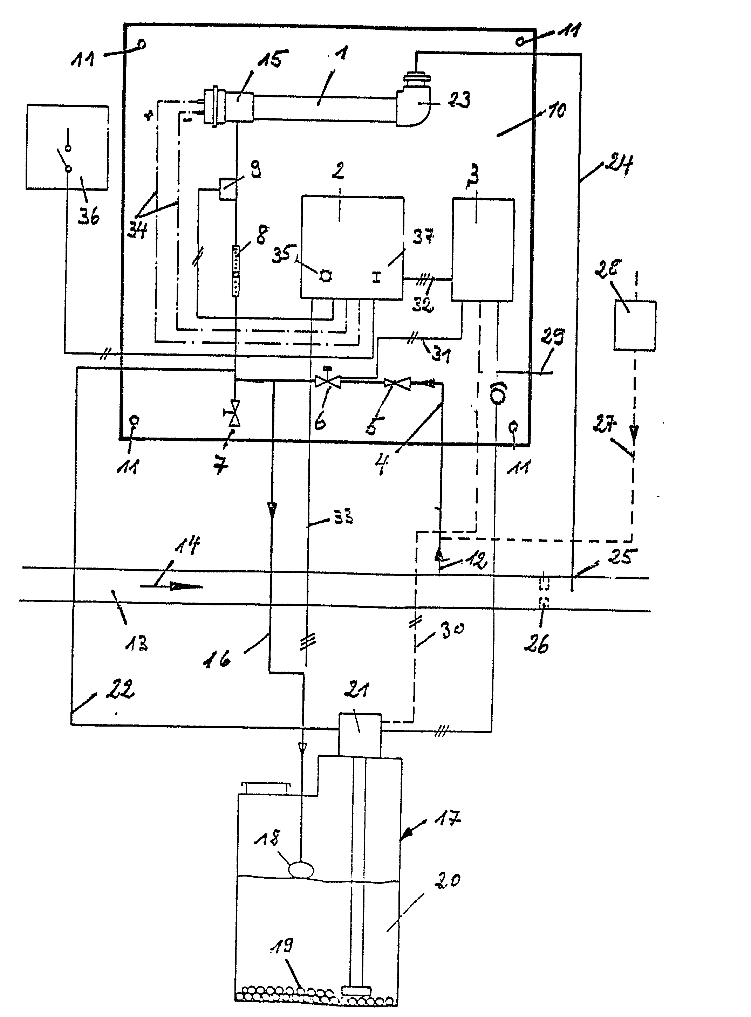

Weitere Einzelheiten der Erfindung ergeben sich aus der nachfolgenden Beschreibung eines Ausführungsbeispiels anhand
der Zeichnung. Die Zeichnung zeigt schematisch eine im Nebenschluß einer durchströmten Rohrleitung betriebenen Elektrolysevorrichtung mit ihren elektrischen und flüssigkeitsführenden Verbindungen.

Die Elektrolysevorrichtung weist einen kompakten Aufbau auf.
Wesentliche Bauteile, wie Elektrolysezelle 1, eine elektrische
Versorgung in Form eines Transformators/Gleichrichters 2,
einer Zusatzsteuerung 3 sowie in den Zulauf 4 der Elektrolysezelle 1 eingesetzter Meß- und Regelteile, wie ein Druckminderventil 5, ein Magnetventil 6, ein Überlaufventil 7, ein Durchfluß-Meß- und Regelgerät 8 und eine Salzkonzentrationsmeßzelle
9, sind überschaubar auf einer Montageplatte 10 angeordnet.
Die Montageplatte 10, die in der Zeichnung im Vergleich zu
der Elektrolysezelle 1 in ihren Dimensionen vergrößert dargestellt ist, läßt sich mittels vorgesehener Bohrlöcher 11
senkrecht, beispielsweise an einer Wand, montieren. Der Zulauf
4 wird mit einer Entnahmestelle 12 einer Umwälzleitung 13
verbunden, durch die das zu desinfizierende Medium in der
durch den Pfeil 14 angedeuteten Durchlaufrichtung gepumpt
wird. Als Zulauf 4 zwischen der Entnahmestelle 12 und dem
Druckminderventil 5 kann eine flexible Rohrleitung eingesetzt
werden, während der Teil des Zulaufs 4 zwischen dem Druckminderventil 5 und dem eingangsseitigen Ende 15 der Elektrolysezelle 1 bevorzugt aus starren Rohrleitungsabschnitten aus
chlorresistenten Kunststoffen, die mit handelsüblichen PVC-
Schweißklebern verbunden sein können, besteht. Die der Umwälzleitung 13 entnommene Flüssigkeit wird über das Druckminderventil 5 mit fest eingestelltem Druck und das Magnetventil
6 zur Öffnen und Schließen des Zulaufs 4 dem Durchfluß-Meß-
und Regelgerät 8 zugeführt. Außerdem wird zwischen dem Magnetventil 6 und dem Durchfluß-Meß- und Regelgerät 8 ein Teil
der Flüssigkeit abgezweigt und einem Salzlösebehälter 17
zugeführt, der über ein Schwimmerventil 18 automatisch mit
Wasser gefüllt wird. In dem dem Salzlösebehälter 10 zugeleiteten Wasser werden Salztabletten 19, beispielsweise Natriumchlorit, gelöst. Die in dem Salzlösebehälter 17 so bevorratete
Salzsole 20 kann mit einer auf dem Salzlösebehälter 17 aufgesetzten Pumpe 21, im vorliegenden Fall eine Dosierpumpe,
über eine Pumpleitung 22 der Zulauf 4 vor Eintritt in das
Durchfluß-Meß- und Regelgerät 8 zudosiert werden. Das ausgangsseitige Ende 23 der Elektrolysezelle 1 ist über eine flexible Dosierleitung 24 mit einer Dosierstelle 25 in der Umwälzleitung 13, die in Strömungsrichtung gesehen hinter der Entnahmestelle 12 liegt, verbunden. Zwischen der Entnahmestelle
12 und der Dosierstelle 25 ist eine Drosselscheibe 26 in
der Umwälzleitung 13 vorgesehen, um einen Differenzdruck
zwischen der Entnahmestelle 12 und der Dosierstelle 25 zu
erzeugen. Der Zulauf 4 kann auch direkt anstelle der Verbindung mit der Entnahmestelle 12 mit einer Frischwasserleitung 27, in der Zeichnung mit einer unterbrochenen Linie
dargestellt, über ein Absperr-Rückschlagventil 28 verbunden
sein.

Die gesamte Elektrolysevorrichtung wird zentral von dem Transformator/Gleichrichter 2 und der Zusatzsteuerung 3 elektrisch
versorgt und gesteuert. Die Zusatzsteuerung 3 weist einen
Netzanschluß 29 auf, über den gleichzeitig die Dosierpumpe
21 elektrisch versorgt wird. Die Zusatzsteuerung 3 ist über
eine Impulsleitung 30 mit der Dosierpumpe 21, über eine Netz-
und Steuerleitung 31 mit dem Magnetventil 6 und über eine
Versorgungsleitung 32 mit dem Transformator/Gleichrichter
2 verbunden. Für den Transformator/Gleichrichter 2 kann eine
eigene Netzleitung 33 vorgesehen sein; die Netzversorgung
kann aber auch über den zentralen Netzanschluß 29 erfolgen.
Die Elektrolysezelle 1 wird über die strichpunktierten Leitungen 34 von dem Transformator/Gleichrichter 2 versorgt.

Beim Betrieb der Elektrolysevorrichtung wird dem über den
Zulauf 4 zugeführten Wasser gesättigte Salzlösung aus dem
Salzlösebehälter 17 zudosiert. Der mit der konzentrierten
Salzlösung definiert beaufschlagte Wasserstrom fließt dann
über die Salzkonzentrationsmeßzelle 9 zur Elektrolysezelle
1, wo das Salz zum Teil in Hypochlorit umgesetzt wird. Die
so hergestellte Hypochloritlösung wird dann direkt der Umwälzleitung 13 und damit dem zu behandelnden bzw. zu desinfizierenden Wasser zugeführt. Im Normalfall wird die Zusatzsteuerung 3 der Elektrolysevorrichtung mit der Steuerung
der nicht dargestellten Umwälzpumpe der Umwälzleitung 13
gekoppelt. Während die Zusatzsteuerung 3, wie bereits erläutert
wurde, den regelbaren Transformator/Gleichrichter 2, das
Magnetventil 6 und die Dosierpumpe 21 versorgt und steuert,
versorgt der Transformator/Gleichrichter 2 nur die Elektrolysezelle 1 und wird seinerseits direkt von der Salzkonzentrationsmeßzelle 9 angesteuert. Ein Leistungsteiler 35 im Transformator/Gleichrichter 2 ist über die Zusatzsteuerung 3 über einen
Frequenzwandler mit der frequenzgesteuerten Magnetdosierpumpe 21 gekoppelt, so daß die Dosierpumpe 21 analog dem
für die Elektrolyse abgegebenen Strom die entsprechende Menge
an konzentrierter Salzsole über die Pumpleitung 22 fördert.

Der Transformator/Gleichrichter 2 kann von einer handelsüblichen Redox- oder $Cl_2$-Meß- und Regeleinrichtung 36 angesteuert werden. Für diesen Fall wird die Vorrichtung mit
einem Hand-Automatik-Umschalter 37 auf automatischen Betrieb
umgestellt. Bei solchem Automatikbetrieb arbeitet die Elektrolysevorrichtung mit fest eingestellten Parametern (auf 100 %)
und wird über die Redox- oder $Cl_2$-Meß- und Regeleinrichtung 36
ein- und ausgeschaltet.

0155479

Hanau, den 21. März 1984
ZPL-eG/W

Heraeus Elektroden GmbH, Hanau

Patentanmeldung

"Verfahren und Vorrichtung, insbesondere zur Desinfektion
von Wasser"

## Patentansprüche

1. Verfahren zur Desinfektion/Sterilisation/Entkeimung von
Wasser, wie Trinkwasser, Brauchwasser, Badewasser, Kühlwasser
oder Abwasser, bei dem eine bevorratete Sole und Wasser
in gewünschtem Verhältnis vermischt werden, bei dem die
Lösung, deren Salzkonzentration gemessen wird, auf elektrochemischem Wege in eine Hypochloritlösung umgewandelt
wird, die dann dem zu behandelnden Wasser zudosiert wird,
dadurch gekennzeichnet, daß das mit der bevorrateten Sole
zu vermischende Wasser direkt einer unter konstantem Druck
stehenden Rohrleitung entnommen wird und daß direkt die
auf elektrochemischem Wege erzeugte Hypochloritlösung
dem zu desinfizierenden Wasser zudosiert wird.

2. Vorrichtung zur Durchführung des Verfahrens nach
Anspruch 1 zur Herstellung einer Hypochloritlösung aus
Wasser mit einem geringen Anteil an Salz, vorzugsweise
Natriumchlorit, die im Nebenschluß einer durchströmten
Rohrleitung betreibbar ist, mit einer Elektrolysezelle,

- 2 -

einem Salzlösebehälter, der über eine Pumpe und eine zwischengeschaltete Chloritkonzentrationsmeßzelle strömungsmäßig verbunden ist, wobei die Elektrolysezelle ausgangsseitig strömungsmäßig mit einer Dosierstelle in Verbindung steht, mit einem Zulauf zur Zuführung von Wasser zu der aus dem Salzlösebehälter geförderten Sole und mit einem elektronischen/elektrischen Steuer-Energieversorgungsteil, dadurch gekennzeichnet, daß der Zulauf (4) von einer unter konstantem Druck stehenden Rohrleitung (13; 27) gespeist wird, die durch ein von einer elektrischen Zusatzsteuerung (3) angesteuertes Absperrorgan (6; 28), beispielsweise einem Magnetventil (6), geöffnet oder geschlossen wird, und daß die in der Elektrolysezelle (1) erzeugte Hypochloritlösung einer Dosierstelle (25) der durchströmten Rohrleitung (13) über eine direkte Dosierleitung (24) von der Elektrolysezelle (1) zugeführt wird.

3. Vorrichtung nach Anspruch 2, dadurch gekennzeichnet, daß vor der Chloritkonzentrationsmeßzelle (9) eine justierbare Durchflußmeßeinrichtung (8) vorgesehen ist.

4. Vorrichtung nach Anspruch 2 oder 3, dadurch gekennzeichnet, daß die geregelte Gleichstromversorgung (2) der Elektrolysezelle (1) mit Transformator und Gleichrichter, das elektrische Absperrorgan (6) im Wasserzulauf (4) sowie die als Dosierpumpe (21) ausgebildete Pumpe des Salzlösebehälters (17) zentral von der Zusatzsteuerung (3) eingeschaltet werden.

5. Vorrichtung nach Anspruch 4, dadurch gekennzeichnet, daß in der von dem zu desinfizierenden Medium durchströmten Rohrleitung (13) ein Durchflußwächter mit einem Impulsgeber vorgesehen ist, der bei einem Fluß des Mediums die Zusatzsteuerung (3) ansteuert, die dann ihrerseits den Transformator/Gleichrichter (2), das elektrische Absperrorgan (6) und die Dosierpumpe (21) einschaltet.

6. Vorrichtung nach Anspruch 4, dadurch gekennzeichnet, daß
die Zusatzsteuerung (3) mit einer Steuerung einer Umwälzpumpe der als Umwälzleitung ausgebildeten Rohrleitung
(13) für das zu desinfizierende Medium gekoppelt ist und
von dieser angesteuert wird, die dann ihrerseits den Transformator und Gleichrichter (2), das elektrische Absperrorgan
(6) und die Dosierpumpe (21) einschaltet und regelt.

7. Vorrichtung nach einem der Ansprüche 2 bis 6, dadurch
gekennzeichnet, daß der Transformator/Gleichrichter (2)
mit der Chloritkonzentrationsmeßzelle (9) elektrisch verbunden ist.

8. Vorrichtung nach einem der Ansprüche 1 bis 7, dadurch
gekennzeichnet, daß alle Bauteile, wie Elektrolysezelle
(1), Chloritkonzentrationsmeßzelle (9), Absperrorgan (6)
und Steuer-Energieversorgungsteil (2, 3), außer dem Salzlösebehälter (17) mit der Dosierpumpe (21) und direkt in die
Rohrleitung (13) eingesetzte Bauteile, auf einer senkrecht
montierbaren Montageplatte (10) angeordnet sind.

1/1